# EUROPÄISCHE PATENTSCHRIFT

(11) **EP 3 127 693 B1**
(45) Veröffentlichungstag und Bekanntmachung des Hinweises auf die Patenterteilung: **27.02.2019**
(21) Anmeldenummer: 16001522.8
(22) Anmeldetag: 08.07.2016
(51) Int. Cl.: B32B 5/02, B32B 5/08, B32B 5/26, B32B 7/12, B32B 27/12, B32B 27/40, D06N 3/14, E04B 1/62

(54) **MEHRSCHICHTVERBUNDFOLIE FÜR DEN BAUBEREICH**
MULTILAYER COMPOSITE FILM FOR THE CONSTRUCTION INDUSTRY
FILM COMPOSITE MULTICOUCHE POUR LE BATIMENT

(30) Priorität: 05.08.2015 DE 102015009956; 21.09.2015 DE 102015012015
(43) Veröffentlichungstag der Anmeldung: 08.02.2017
(73) Patentinhaber: Ewald Dörken AG, 58313 Herdecke (DE)
(72) Erfinder: Harfmann, Carsten, DE - 60323 Frankfurt (DE); Laur, Rüdiger, DE - 44227 Dortmund (DE)
(74) Vertreter: Von Rohr Patentanwälte Partnerschaft mbB

(56) Entgegenhaltungen:
- EP-A1- 1 849 814
- EP-A1- 2 586 807
- WO-A1-2012/163339
- DE-U1-202010 000 934
- US-A1- 2005 097 857

## Beschreibung

Die Erfindung betrifft eine Mehrschichtverbundfolie, für den Baubereich, insbesondere Dachunterspannbahn, Unterdeckbahn oder Fassadenbahn, mit wenigstens einem wasser- und wasserdampfdurchlässigen, Polyesterfilamente aufweisenden Vlies als Trägerschicht und einer wasserdichten und wasserdampfdurchlässigen Funktionsschicht, wobei das Material der Funktionsschicht TPU aufweist, insbesondere aus TPU besteht.

Mehrschichtverbundfolien für den Baubereich müssen zum einen wasserdicht, zum anderen aber wasserdampfdurchlässig sein, um auf diese Weise eine diffusionsoffene, jedenfalls aber diffusionsbremsende, aber dennoch wasserdichte Ausführung des Gebäudes bzw. des Unterdaches gewährleisten zu können. Gerade für die Dachkonstruktion ist ein Schutz vor Feuchtigkeit (z.B. durch Kondensat unterhalb der Dacheindeckung), Flugschnee und Schmutz wichtig. Für die Schutzfunktion ist es unabdingbar, dass die Membran weder durch äußere mechanische Einwirkung noch durch extrem lange Freibewitterung, Temperatur, Mikroorganismen, Hydrolyse oder durch Korrosion auslösende Medien angegriffen und zerstört wird.

Bei Mehrschichtverbundfolien wird je nach Funktionsschicht bzw. Membran zwischen zwei verschiedenen Arten unterschieden. Eingesetzt werden zum einen mikroporöse Membranen und zum anderen monolithische Membranen als wasserdampfdiffusionsoffene oder -bremsende Funktionsschicht. Diese werden üblicherweise als zweilagiger Verbund der Funktionsschicht mit einer Trägerschicht, in der Regel einem Vlies, ausgestattet.

Mikroporöse Membranen bestehen häufig aus einem hydrophoben Polymer (z.B. Polyethylen oder Polypropylen) mit kleinen Poren. Der Wassertransport geschieht hierbei mit Hilfe der sogenannten Knudsendiffusion. Die Poren sind dabei so dimensioniert, dass einzelne Wassermoleküle durch die Membran hindurchgelangen, Wasser unter Normalbedingungen, das heißt bis zu einer Wassersäule von 20 m, jedoch nicht. Problematisch ist, dass mit verunreinigtem Wasser und damit veränderter Oberflächenspannung des Wassers sich auch die maximale Wassersäule ändert bzw, verringert. Im Extremfall kann die Oberflächenspannung bei Verwendung von sogenannten Netzmitteln gegen Null tendieren. Die Membran kann dabei letztlich ihre Wasserdichtigkeit verlieren.

Monolithische Membranen zeigen das vorgenannte Verhalten nicht, da es sich um porenfreie Funktionsschichten handelt, bei denen der Wasserdampftransport in anderer Weise geschieht als bei mikroporösen Bahnen. Hierbei ergibt sich beim Wasserdampftransport folgende Reihenfolge:
- Adsorption = Aufnahme und physikalische Bindung der Wassermoleküle an der Membranoberfläche
- Absorption = Eindringen der Wassermoleküle in die Membran
- Diffusion = Transport der Wassermoleküle durch die Membran, wobei Voraussetzung dafür ein Konzentrationsgefälle zwischen den Oberflächen der Membran ist
- Desorption = Abgabe in den Gasraum

Übliche Polymere für monolithische Membranen bzw. Funktionsschichten für Mehrschichtverbundfolien für den Baubereich sind:
- thermoplastische Polyurethane (TPU) auf Basis von Polyether- oder Polyesterurethanen
- Polyetheresterelastomere
- Polyamide
- PLA-Folien
- Copolyester

Die vorgenannten Permeationsvorgänge sind in der Regel unproblematisch für Membranen aus thermoplastischen Polyurethanen (TPU), Polyetheresterelastomeren und Polyamiden, sofern
- gemäßigtes Klima vorliegt,
- die Freibewitterungszeit auf maximal 12 Wochen limitiert ist,
- das Wasser nicht durch spezielle Lösungsmittel, Netzmittel, Holzschutzmittel, stark oxidierende Flüssigkeiten (z.B. zur Schimmelbekämpfung), Säuren oder Laugen verunreinigt ist, und/oder
- eine etwaige Vorschädigung der Membran durch mechanische Schädigung, z.B. durch Abrieb, UV-Strahlung oder Wärme sowie Wassereintrag in die Dachkonstruktion, moderat ist.

Sind eine oder mehrere der vorgenannten Bedingungen nicht gegeben, kann die Funktionsdauer der Membran deutlich eingeschränkt werden, d. h. ein dauerhafter Schutz der Dachkonstruktion vor Feuchtigkeit kann nicht mehr gewährleistet werden.

DE 20 2010 000 934 U1 beschreibt eine Unterdeckbahn für ein geneigtes Dach mit einer wasser- und wasserdampfdurchlässigen Trägerschicht und wasserdichten und wasserdampfdurchlässigen Dichtschichten auf Basis von TPU. Untersuchungen haben gezeigt, dass gut stabilisierte Formulierungen des Materials der Membranschicht bei intakter und damit lichtdichter Dachkonstruktion, kurzer Freibewitterungszeit und mitteleuropäischem Klima die gestellten Anforderungen für ein Dachleben überstehen. Allerdings liegen die vorgenannten Idealbedingungen nicht überall vor. Es existieren sowohl in Deutschland als auch im Ausland Regionen, wo eher problematische klimatische Bedingungen vorherrschen, die die Funktion und die Funktionsdauer der Membran beeinträchtigen. Des weiteren zeigen Schadensfälle, dass es auch dann zu einem vorzeitigen Ausfall der monolithischen Membran kommen kann, wenn z.B. Freibewitterungszeiten nur leicht überschritten werden oder der Feuchtigkeitseintrag, z.B. durch kleine Defekte, im Dach erhöht ist.

Aufgabe der vorliegenden Erfindung ist es nun, eine Mehrschichtverbundfolie der eingangs genannten Art zur Verfügung zu stellen, die einfach und kostengünstig herstellbar ist und auch in Regionen mit unterschiedlichen klimatischen Bedingungen einen dauerhaften Schutz vor Feuchtigkeit gewährleistet.

Die vorgenannte Aufgabe ist bei einer Mehrschichtverbundfolie der eingangs genannten Art erfindungsgemäß im wesentlichen dadurch gelöst, dass das TPU ein TPU des Carbonattyps ist und dass die Funktionsschicht ein Flächengewicht von 20 bis 100 g/m³ aufweist und auf die Trägerschicht aufextrudiert ist. Durch die Aufextrusion ergibt sich eine unlösliche Verbindung zwischen der Funktionsschicht und der Trägerschicht.
Bei der Erfindung kommt der Kombination der als Polyestervlies ausgebildeten Trägerschicht in Verbindung mit der TPU-Carbonattyp-Funktionsschicht, die in einem Extrusionsprozess auf die Trägerschicht aufgebracht wird, besondere Bedeutung zu.
Im Zusammenhang mit der vorliegenden Erfindung ist festgestellt worden, dass die Beschickung der Trägerschicht mit der Funktionsschicht in einem Extrusionsprozess keine Beeinflussung der Wasserdampfdurchlässigkeit der TPU-Carbonattyp-Funktionsschicht verursacht. Letztlich werden durch diese Art der Beschichtung, die im Übrigen kostengünstig ist und sich leicht in den Produktionsprozess integrieren lässt, die funktionsnotwendigen Eigenschaften der Funktionsschicht nicht beeinträchtigt. Im Übrigen ist festgestellt worden, dass sich insbesondere bei einer Polyesterfilamente aufweisenden Trägerschicht eine besonders gute Haftung der durch einen Extrusionsprozess aufgebrachten Funktionsschicht auf der Trägerschicht ergibt, und zwar ohne dass eine Vorbehandlung der Filamente des Vlieses zumindest auf der Beschichtungsseite und/oder eine ergänzende Klebschicht bzw. -verbindung erforderlich wären.

Letztlich wird durch die erfindungsgemäße Ausgestaltung ein Verbund mit einer solchen Haftung der miteinander verbundenen Schichten hergestellt, die sich bei anderen Materialkombinationen nicht erreichen lässt, wobei gleichzeitig die funktionsnotwendigen Eigenschaften der Funktionsschicht in keinster Weise beeinträchtigt werden.

Darüber hinaus ergeben sich durch Verwendung eines TPU des Carbonattyps gegenüber anderen TPU-Typen weitere wesentliche Vorteile.

Unter einem TPU des Carbonattyps ist ein thermoplastisches Polyurethan zu verstehen, das durch Polyaddition von einem Isocyanat mit einem oder mehreren Polyolen hergestellt werden kann. Kennzeichnend und besonders vorteilhaft für das TPU des Carbonattyps ist, dass mindestens eines der Polyole das Strukturelement eines Kohlensäurediesters enthält.

Bei den Isocyanaten kann es sich um aliphatische Diisocyanate, wie H12 MDI (1-Isocyanato-4-[(4-isocyanatocyclohexyl) methyl]cyclohexan), HDI (1,6-Hexamethylendiisocyanat) und/oder IPDI (3-Isocyanatmethyl-3,5,5-trimethylcyclohexylisocyanat) oder um aromatische Diisocyanate wie TDI (Toluol-2,4-diisocyanat), NDI (Naphthylen-1,5-diisocyanat) und/oder MDI (Methylen-di(phenylisocyanat))handeln.

Auf Seiten der Polyole handelt es sich um aromatische oder aliphatische Polyole. Als Kettenverlängerer werden insbesondere kurzkettige Diole eingesetzt. So werden Carbonsäureester-Polyole eingesetzt, die durch Umesterung von Kohlensäurediphenylester mit Diolen, wie z.B. 1,6-Hexahdiol, zugänglich sind. Weiter können Polycarbonat-Polyole eingesetzt werden, die aus der Reaktion von Kohlendioxid mit Epoxiden zugänglich sind,

Durchgeführte Versuche mit TPU des Carbohattyps, die Polyole mit dem Strukturelement eines Kohlensäureesters und/oder -diesters beinhalten, haben deutliche Vorteile gegenüber TPU des Ether- oder Ester- bzw. Ether-Ester-Typs gezeigt.

Unter einem TPU-Estertyp ist ein thermoplastisches Polyurethan zu verstehen, das aus einem Isocyanat und einem oder mehreren Polyolen durch Polyaddition aufgebaut werden kann, wobei mindestens eines der Polyole das Strukturelement eines Carbonsäureesters enthält. Bei den Isocyanaten kann es sich um aliphatische Diisocyanate, wie H12 MDI (1-Isocyanato-4-[(4-isocyanatocyclohexyl)methyl]cyclohexan), HDI (1,6-Hexamethylendiisocyanat) und IPDI (3-Isocyanatmethyl-3,5,5-trimethylcyclohexylisocyanat) oder um aromatische Diisocyanate wie TDI (Toluol-2,4-diisocyanat), NDI (Naphthy)en-1,5-diisocyanat) oder MDI (Methylen-di(phenylisocyanat)), handeln.

Auf Seite der Polyole handelt es sich um aromatische oder aliphatische Polyole. Als Kettenverlängerer werden insbesondere kurzkettige Diole eingesetzt.

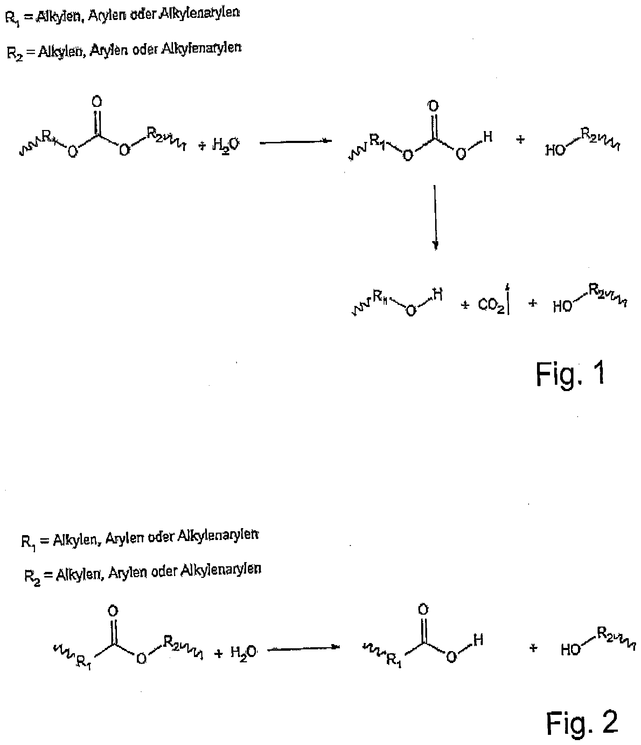

In Fig. 2 ist ein Ausschnitt eines TPU-Estertypsim Bereich der Esterbindung dargestellt. Der Ester kann durch Reaktion mit Wasser hydrolysiert werden. Hierbei bildet sich eine stabile, organische Carbonsäure. Es ist bekannt, dass Säuren die Hydrolyse von Estern katalysieren. Folglich kann es zu einer autokatalytischen Hydrolyse und somit zu einem sich selbst beschleunigenden Abbau des TPU kommen.

Weniger hydrolyseanfällig verhalten sich TPU des Ethertyps, deren Beständigkeit jedoch bei UV-Belastung oder erhöhten Temperaturen vergleichbar mit TPU des Estertyps sind.

In Fig. 1 ist ein Ausschnitt eines TPU des Carbonattyps im Bereich der Carbonatbindung dargestellt. Der Kohlensäureester kann durch Reaktion mit Wasser hydrolysiert werden. Hierbei bildet sich ein instabiler Monoester der Kohlensäure, aus dem sofort Kohlendioxid eliminiert wird. Das gasförmige Kohlendioxid diffundiert aus dem Polymer heraus. Somit bleiben bei der Hydrolyse bei einem TPU des Carbonattyps im Gegensatz zum einem TPU des Estertyps keine sauren Verbindungen bzw. funktionellen Gruppen zurück, die einen autokatalytischen Effekt aufweisen können.

Daher zeigen TPU des Carbonattyps eine deutlich verbesserte dauerhafte Betriebssicherheit im Rahmen der Verwendung als Funktionsschicht einer Mehrschichtfolie für den Baubereich. Hierzu zählen:
- deutlich höhere Hydrolysebeständigkeit,
- deutlich höhere Chemikalienbeständigkeit,
- deutlich bessere Alterungsbeständigkeit bei hohen Temperaturen,
- verbesserte Bewitterungsbeständigkeit und
- höhere Abriebsfestigkeit.
Des weiteren ist festgestellt worden, dass TPU des Carbonattyps ein verbessertes inhärentes flammhemmendes Verhalten mit sich bringen.
Aus diesen Eigenschaften lässt sich ableiten, dass bei Verwendung eines Carbonat-TPUs das Flächengewicht des monolithischen Funktionsfilms gesenkt werden kann, ohne
- die Betriebssicherheit gegenüber bisherigen Folien, welche im Baubereich eingesetzt werden, zu reduzieren,
- behördliche Anforderungen hinsichtlich der zu erfüllenden Brandschutznormung zu missachten.

Damit ergibt sich eine ressourcen- und kostensparende Ausführung einer Mehrschichtfolie.

Erfindungsgemäß ist im übrigen festgestellt worden, dass es zur Erfüllung der geforderten Schutzfunktion ausreichend ist, wenn die Funktionsschicht bei Verwendung eines Carbonat-TPUs ein Flächengewicht von 20 bis100 g/m² hat. Bevorzugt liegt das Flächengewicht zwischen 30 und 80 g/m². Insbesondere sind Flächengewichte zum einem zwischen 35 bis 45 g/m² und zum anderen zwischen 65 und 75 g/m² von Bedeutung. Dabei versteht es sich, dass jedes Zwischenintervall und jeder Einzelwert innerhalb der genannten Intervallbereiche möglich ist.
Bekannte TPU-Membranen des Ester- oder Ether-Typs haben ein deutlich höheres Flächengewicht, wenn die gleichen Eigenschaften wie bei einer Mehrschichtverbundfolie wie bei einer erfindungsgemäßen Funktionsschicht erreicht werden sollen. Bei gleichem Flächengewicht ist die erfindungsgemäße Mehrschichtverbindfolie mit einer Funktionsschicht aus einem TPU des Carbonattyps deutlich überlegen.
Um einen hinreichend guten Schichtenverbund zu haben, ist erfindungsgemäß vorgesehen, dass die Trägerschicht einen Anteil von 50 % bis 100 % an Polyesterfilamenten aufweist. Grundsätzlich können also auch andere Fasern in der Trägerschicht vorgesehen sein, wobei bevorzugt ist, wenn der Anteil an Polyesterfasern überwiegt. Besonders bevorzugt ist es, wenn das Vlies der Trägerschicht vollständig aus Polyesterfasern besteht.

In diesem Zusammenhang bietet es sich an, wenn die Trägerschicht ein Flächengewicht zwischen 50 g/m² bis 300 g/m², insbesondere 80 g/m² bis 150 g/m² und insbesondere zwischen 100 g/m² und 120 g/m² aufweist.

In der Regel reicht es aus, wenn die Mehrschichtverbundfolie zweischichtig ist, also die Trägerschicht und die Funktionsschicht aufweist. Für besondere Anwendungsfälle kann aber auch ein mehr als zweischichtiger Schichtaufbau vorgesehen sein. So ist es möglich, dass wenigstens zwei Trägerschichten vorgesehen sind, zwischen denen die Funktionsschicht dann sandwichartig angeordnet ist. Auch bei dieser Ausführungsform bietet es sich an, wenn die weitere Trägerschicht letztlich über den Extrusionsprozess der Funktionschicht mit dieser verbunden ist. Verfahrensmäßig ist dann vorgesehen, dass zunächst die Funktionsschicht auf die erste Trägerschicht aufextrudiert wird. Im Inline-Verfahren läuft dann die zweite Trägerschicht auf die aufextrudierte Funktionsschicht, solange diese noch in einem entsprechenden (zäh-)flüssigen bzw. noch nicht verfestigten Zustand ist. Durch bedarfsweise vorgesehene Andruckrollen wird dann der notwendige Schichtenverbund verfestigt.

Alternativ oder ergänzend dazu ist es möglich, wenigstens eine Verstärkungsschicht aus einem Verstärkungsgewebe oder Verstärkungsgelege vorzusehen, wobei die Trägerschicht und die Verstärkungsschicht aus unterschiedlichen Materialien bestehen. Mit zwei Trägerschichten ist dann ein vier- oder fünfschichtiger Schichtaufbau möglich. Dabei kann die Verbindung der Verstärkungsschicht(en) mit der Trägerschicht über ein reaktives Hotmelt erfolgen. Dieses Hotmelt, das lediglich der Verbindung der Verstärkungsschicht oder -schichten mit der jeweiligen Trägerschicht dient, beeinflusst nicht die Wasserdampfdurchlässigkeit oder sonstige Eigenschaften der Funktionsschicht.

Grundsätzlich ist es auch möglich, dass das Material der Verstärkungsschicht in die Trägerschicht eingearbeitet ist. Auf diese Weise ergibt sich letztlich eine verstärkte Trägerschicht.

Im Zusammenhang mit der Erfindung sind Versuche durchgeführt worden, um die verbesserten Eigenschaften der Funktionsschicht mit einem TPU des Carbonattyps gegenüber einer Funktionsschicht eines TPU des Estertyps zu belegen. Dies geben die nachfolgenden Ausführungsbeispiele 1 bis 6 wieder.

### Ausführungsbeispiel 1:

Ein Polyestervlies mit einer Grammatur von 110 g/m², bestehend aus Filamentfasern, wird in einem Extrusionsprozess mit 40 g/m² TPU des Carbonattyps beschichtet. Zur Bestimmung der Alterungsbeständigkeit wird das beschichtete Produkt acht Wochen lang der Freibewitterung unter "Florida-Bedingungen" ausgesetzt. Die TPU-Funktionsschicht wird der Sonne entgegen in einem 45°-Winkel nach Süden ausgerichtet. Im Anschluss wird die Reißdehnung der TPU-Funktionsschicht nach EN12311-1 getestet. Diese Reißdehnung beträgt 89% des Ausgangswertes vor der Freibewitterung.

Unter der Bezeichnung "Florida-Bewitterung" wird ein standardisiertes Verfahren der Firma Q-Lab zur Freibewitterung verstanden. Hierbei werden zu untersuchende Prüflinge in einer Außenbewitterungsanlage im Süden des US-Bundesstaates Florida den dort vorherrschenden klimatischen Bedingungen ausgesetzt. Aufgrund der hohen jährlichen UV-Belastung in Verbindung mit sehr hoher Luftfeuchtigkeit kann hier beispielsweise eine einjährige Exposition des Prüflings gegenüber äußeren Umweltfaktoren einer mehrjährigen Bewitterung an anderen Orten entsprechen. Die Tests erfolgen dabei nach der Methode ASTM G7 2011. Bei den im Zusammenhang mit der vorliegenden Erfindung geprüften Mustern handelte es sich um Prüflinge mit einer Abmessung von 30 cm Länge und 15 cm in der Breite. Die Prüflinge wurden in einem Rahmen in einem Winkel von 45° nach Süden und direkt der Bewitterung ausgesetzt.

### Ausführungsbeispiel 2:

Ein Polyestervlies mit einer Grammatur von 110 g/m², bestehend aus Filamentfasern, wird in einem Extrusionsprozess mit 40 g/m² TPU des Estertyps beschichtet. Zur Bestimmung der Alterungsbeständigkeit wird das beschichtete Produkt acht Wochen lang der Freibewitterung unter "Florida-Bedingungen" ausgesetzt. Die TPU-Funktionsschicht wird der Sonne entgegen in einem 45°-Winkel nach Süden ausgerichtet. Im Anschluss wird die Reißdehnung der TPU-Funktionsschicht nach EN12311-1 getestet. Diese Reißdehnung beträgt 40% des Ausgangswertes vor der Freibewitterung.

### Ausführungsbeispiel 3:

Ein Polyestervlies mit einer Grammatur von 110 g/m², bestehend aus Filamentfasern, wird in einem Extrusionsprozess mit 70 g/m² TPU des Estertyps beschichtet. Zur Bestimmung der Alterungsbeständigkeit wird das beschichtete Produkt acht Wochen lang der Freibewitterung unter "Florida-Bedingungen" ausgesetzt. Die TPU-Funktionsschicht wird der Sonne entgegen in einem 45°-Winkel nach Süden ausgerichtet. Im Anschluss wird die Reißdehnung der TPU-Funktionsschicht nach EN12311-1 getestet. Diese Reißdehnung beträgt 85% des Ausgangswertes vor der Freibewitterung.

### Ausführungsbeispiel 4:

Ein Polyestervlies mit einer Grammatur von 110 g/m², bestehend aus Filamentfasern, wird in einem Extrusionsprozess mit 70 g/m² TPU des Carbonattyps beschichtet. Das beschichtete Produkt wird 12 Wochen lang in einem Klimaschrank bei 70 °C und 90% relativer Luftfeuchtigkeit gelagert. Im Anschluss wird die Reißdehnung der TPU-Funktionsschicht nach EN12311-1 getestet. Diese Reißdehnung beträgt 95% des Ausgangswertes vor der Lagerung im Klimaschrank.

### Ausführungsbeispiel 5:

Ein Polyestervlies mit einer Grammatur von 110 g/m², bestehend aus Filamentfasern, wird in einem Extrusionsprozess mit 70 g/m² TPU-Carbonattyp beschichtet. Das beschichtete Produkt weist einen Widerstand gegen das Durchdringen von Wasser nach DIN EN 20811 von > 2000 cm Wassersäule auf. Zur Bestimmung der UV-Beständigkeit wird das beschichtete Produkt nach DIN EN 13859-1 der UV-Strahlung ausgesetzt. Nach einer Bestrahlungsdauer von 336 h wurde der Widerstand gegen das Durchdringen von Wasser nach DIN EN 20811 mit > 2000 cm Wassersäule telt. Die Messungen nach DIN EN 20811 erfolgen grundsätzlich bei einer Wassertemperatur von 20 °C und einer Steigungsgeschwindigkeit des Wasserdruckes von 60 cm Wassersäule/min.

### Ausführungsbeispiel 6:

Ein Polyestervlies mit einer Grammatur von 110 g/m², bestehend aus Filamentfasern, wird in einem Extrusionsprozess mit 70 g/m² TPU-Estertyp beschichtet. Das beschichtete Produkt weist einen Widerstand gegen das Durchdringen von Wasser nach DIN EN 20811 von > 2000 cm auf. Zur Bestimmung der UV-Beständigkeit wird das beschichtete Produkt nach DIN EN 13859-1 der UV-Strahlung ausgesetzt. Nach einer Bestrahlungsdauer von 336 h wurde der Widerstand gegen das Durchdringen von Wasser nach DIN EN 20811 mit 789 cm Wassersäule ermittelt. Die Messungen nach DIN EN 20811 erfolgen grundsätzlich bei einer Wassertemperatur von 20 °C und einer Steigungsgeschwindigkeit des Wasserdruckes von 60 cm Wassersäule/min.

Aus den Ausführungsbeispielen folgt, dass mindestens eine Grammaturerhöhung von 75% bei einem TPU des Estertyps im Vergleich zu einem TPU des Carbonattyps benötigt wird, um die gleiche Reißdehnung und die gleiche Beständigkeit im Florida-Alterungstest zu erzielen. Des Weiteren ergibt sich aus den Ausführungsbeispielen, dass eine erfindungsgemäße Mehrschichtverbundfolie eine gesteigerte Hydrolysestabilität aufweist. Letztlich ist nach 336 h UV-Bestrahlung gemäß DIN EN 13859 bei gleicher TPU-Grammatur der Widerstand gegen das Durchdringen von Wasser nach DIN EN 20811 im Falle von TPU-Carbonattyp mindestens doppelt so hoch wie im Vergleich zu einem TPU-Estertyp.

Des Weiteren betrifft die Erfindung ein Verfahren zur Herstellung einer Mehrschichtverbundfolie der vorgenannten Art, wobei die Beschichtung der Trägerschicht mit der Funktionsschicht ausschließlich durch einen Extrusionsprozess erfolgt und die Funktionsschicht und die Trägerschicht durch den Extrusionsprozess miteinander verbunden sind, und zwar ohne dass weitere Verbindungsmittel oder - schichten vorgesehen sind. Im Falle eines dreischichtigen Aufbaus der Mehrschichtverbundfolie, wobei die Funktionsschicht dann zwischen zwei Trägerschichten aufgenommen ist, ist verfahrensgemäß vorgesehen, dass die Funktionsschicht zunächst auf die erste Trägerschicht aufextrudiert und mit dieser verbunden wird und dass anschließend die zweite Trägerschicht zuläuft und auf die noch nicht verfestigte Funktionsschicht aufgebracht und gegebenenfalls aufgepresst wird, so dass sich eine feste Verbindung zwischen der zweiten Trägerschicht und der Funktionsschicht ergibt.

Nachfolgend werden Ausführungsbeispiele der Erfindung anhand der Zeichnung erläutert. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung,

Es zeigt
- Fig. 1: einen Ausschnitt eines TPU des Carbonattyps im Bereich der Carbonatbindung,
- Fig. 2: einen Ausschnitt eines TPU des Estertyps im Bereich der Esterbindung,
- Fig. 3: eine perspektivische Ansicht eines Teils einer erfindungsgemäßen Mehrschichtverbundfolie,
- Fig. 4: eine Querschnittsansicht einer ersten Ausführungsform einer erfindungsgemäßen Mehrschichtverbundfolie,
- Fig. 5: eine Querschnittsansicht einer zweiten Ausführungsform einer erfindungsgemäßen Mehrschichtverbundfolie,
- Fig. 6: eine Querschnittsansicht einer dritten Ausführungsform einer erfindungsgemäßen Mehrschichtverbundfolie,
- Fig. 7: eine Querschnittsansicht einer vierten Ausführungsform einer erfindungsgemäßen Mehrschichtverbundfolie und
- Fig. 8: eine Querschnittsansicht einer fünften Ausführungsform einer erfindungsgemäßen Mehrschichtverbundfolie.

Auf die Fig. 1 und 2 bzw. die Darstellungen der Ausschnitte eines TPU des Carbonatyps (Fig. 1) und eines TPU des Estertyps (Fig. 2) ist zuvor bereits eingegangen worden. Auf die diesbezüglichen Ausführungen wird verwiesen.

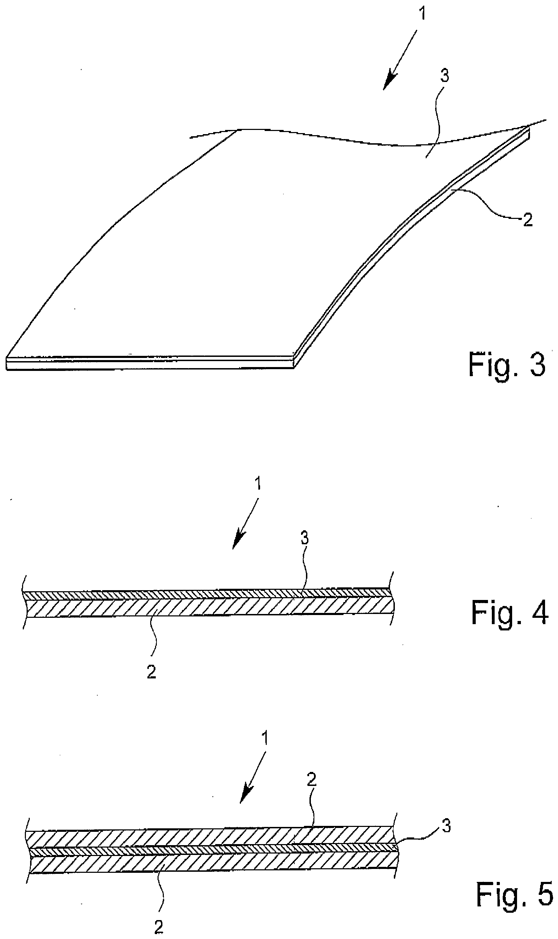

Fig. 3 zeigt eine Mehrschichtverbundfolie 1, die zur Verwendung im Baubereich vorgesehen ist. Hierbei kann es sich beispielsweise um eine Dachunterspannbahn, eine Unterdeckbahn oder eine Fassadenbahn handeln. Die Mehrschichtverbundfolie 1, die in der Regel zu Lagerungs- und Transportzwecken als Rollenware vorliegt, weist wenigstens eine wasser- und wasserdampfdurchlässige Trägerschicht 2 und eine wasserdichte und wasserdampfdurchlässige Funktionsschicht 3 auf. Die Funktionsschicht 3 ist auf TPU-Basis ausgeführt. Wird die Mehrschichtverbundfolie 1 als Unterdeckbahn ausgeführt, werden mehrere dieser Bahnen auf dem Dach an ihren Längsrändern überlappend verlegt und anschließend miteinander verbunden. Dies kann über eine Klebverbindung, eine thermische Schweißverbindung oder über eine Quellschweißverbindung erfolgen.

In den Fig. 4 bis 8 sind verschiedene Ausführungsformen der Mehrschichtverbundfolie 1 ausschnittsweise im Querschnitt dargestellt.

Die Fig. 4 zeigt einen zweischichtigen Schichtaufbau. Unterseitig ist die Trägerschicht 2 vorgesehen, während oberseitig die Funktionsschicht 3 mit der Membran aus Carbonat-TPU vorgesehen ist.

Es versteht sich, dass es bei der Ausführungsform gemäß Fig. 4 grundsätzlich auch möglich ist, die Trägerschicht 2 oberseitig anzuordnen.

Die Ausführungsform gemäß Fig. 5 hat einen dreischichtigen Schichtaufbau, wobei die Funktionsschicht 3 zwischen zwei Trägerschichten 2 sandwichartig aufgenommen ist. Die beiden Trägerschichten 2 können, müssen aber nicht, die gleiche Dicke haben und können, müssen aber nicht, aus dem gleichen Material bestehen.

Grundsätzlich ist es auch möglich, einen nicht dargestellten dreischichtigen Schichtaufbau vorzusehen, der dem Schichtaufbau gemäß Fig. 5 entspricht, wobei allerdings statt einer Trägerschicht eine Verstärkungsschicht aus einem Verstärkungsgewebe oder Verstärkungsgelege vorgesehen ist. Dabei sind die Materialien der Trägerschicht 2 und der Verstärkungsschicht unterschiedlich.

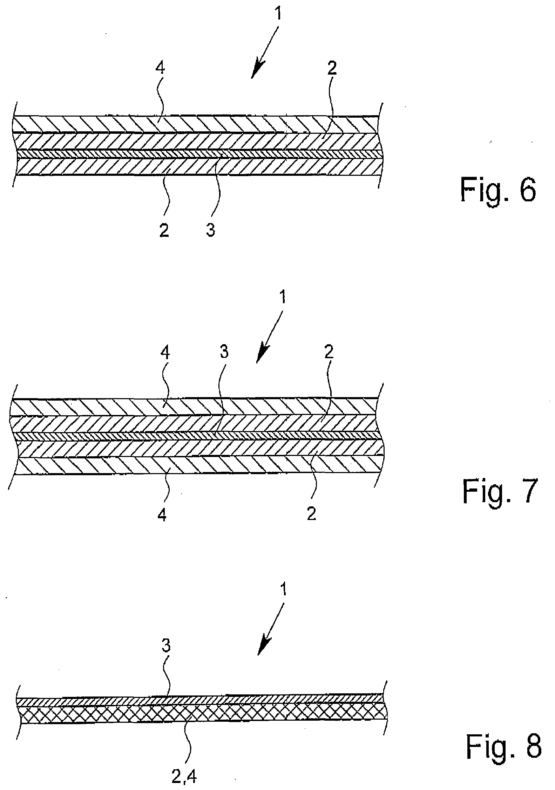

In Fig. 6 ist ein vierschichtiger Schichtaufbau dargestellt. Dieser entspricht dem Schichtaufbau gemäß Fig. 5, wobei oberseitig eine ergänzende Verstärkungsschicht 4 vorgesehen ist. Dabei versteht es sich, dass die Verstärkungsschicht 4 auch unterseitig vorgesehen sein kann. Auch bei dieser Ausführungsform sind die Materialien der Trägerschicht 2 und der Verstärkungsschicht 4 unterschiedlich. Die Materialien der Trägerschichten 2 sind vorliegend gleich, können aber auch unterschiedlich sein.

In Fig. 7 ist eine Ausführungsform dargestellt, bei der ausgehend von der Ausführungsform gemäß Fig. 6 eine zusätzliche Verstärkungsschicht 4 unterseitig vorgesehen ist.

Bei der Ausführungsform gemäß Fig. 8 ist wiederum ein zweischichtiger Schichtaufbau vorgesehen. Hierbei ist das Material der Verstärkungsschicht 4 in die Trägerschicht 2 eingearbeitet. Es handelt sich damit um eine kombinierte Träger-Verstärkungsschicht. Es versteht sich, dass diese kombinierte Schicht grundsätzlich auch oberseitig der Funktionsschicht 3 vorgesehen sein kann.

Bei einer nicht dargestellten Ausführungsform kann sowohl ober- als auch unterseitig eine kombinierte Träger-Verstärkungsschicht vorgesehen sein.

Bei einer weiteren, nicht dargestellten Ausführungsform ist ein dreischichtiger Aufbau vorgesehen, nämlich mit einer TPU-Funktionsschicht, einer mittigen Trägerschicht und einer weiteren TPU-Funktionsschicht.

Bei allen Ausführungsformen ist vorgesehen, dass die Funktionsschicht 3 auf die Trägerschicht 2 aufextrudiert und durch den Extrusionsprozess miteinander verbunden ist. Im Falle eines dreischichtigen Aufbaus, wobei die Funktionsschicht 3 sandwichartig zwischen den Trägerschichten angeordnet ist, wird nach der Beschichtung der Funktionsschicht 3 auf die erste Trägerschicht 2 die weitere Trägerschicht 3 auf die noch nicht verfestigte Funktionsschicht 3 aufgebracht. Dies erfolgt in einem Inline-Verfahren, bei dem die weitere Trägerschicht 3 zuläuft und der dreischichtige Verbund über Druckrollen verpresst wird, so dass sich auch zwischen der Funktionsschicht und der weiteren Trägerschicht eine feste Verbindung durch den Extrusionsprozess ergibt, und zwar ohne dass Kleber, Haftmittel oder sonstige Beschichtungen der Fasern der Trägerschicht erforderlich wären.

### Bezugszeichenliste:

- 1: Mehrschichtverbundfolie
- 2: Trägerschicht
- 3: Funktionsschicht
- 4: Verstärkungsschicht

## Patentansprüche

1. Mehrschichtverbundfolie (1) für den Baubereich, insbesondere Dachunterspannbahn, Unterdeckbahn oder Fassadenbahn, mit wenigstens einem wasser- und wasserdampfdurchlässigen, Polyesterfilamente aufweisenden Vlies als Trägerschicht (2) und einer wasserdichten und wasserdampfdurchlässigen Funktionsschicht (3), wobei das Material der Funktionsschicht (3) TPU aufweist, insbesondere aus TPU besteht,
**dadurch gekennzeichnet,**
**dass** das TPU ein TPU des Carbonattyps ist und dass die Funktionsschicht (3) auf die Trägerschicht (2) aufextrudiert ist, so dass die Trägerschicht (2) und die Funktionsschicht (3) durch den Extrusionsprozess miteinander verbunden sind, wobei die Funktionsschicht (3) ein Flächengewicht von 20 bis 100 g/m² aufweist.

2. Mehrschichtverbundfolie nach Anspruch 1, **dadurch gekennzeichnet, dass** das TPU aus einem oder mehreren Isocyanaten und einem oder mehreren Polyolen, insbesondere Diolen, durch Polyaddition aufgebaut ist.

3. Mehrschichtverbundfolie nach Anspruch 1 oder 2, **dadurch gekennzeichnet, dass** mindestens eines der Polyole das Strukturelement eines Kohlensäureesters und/oder - diesters enthält.

4. Mehrschichtverbundfolie nach Anspruch 2 oder 3, **dadurch gekennzeichnet, dass** als Polyole aromatische und/oder aliphatische Polyole, insbesondere kurzkettige Diole, vorgesehen sind.

5. Mehrschichtverbundfolie nach einem der vorhergehenden Ansprüche, **dadurch gekennzeichnet, dass** als Isocyanate aliphatische Diisocyanate, insbesondere H12 MDI (1-Isocyanato-4-[(4-isocyanatocyclohexyl)methyl]cyclohexan), HDI (1,6-Hexamethylendiisocyanat) und/oder IPDI (3-Isocyanatmethyl-3,5,5-trimethylcyclohexylisocyanat), und/oder aromatische Diisocyanate, insbesondere TDI (Toluol-2,4-diisocyanat), NDI (Naphthylen-1,5-diisocyanat) und/oder MDI (Methylendi(phenylisocyanat)), vorgesehen sind.

6. Mehrschichtverbundfolie nach Anspruch 2 bis 5, **dadurch gekennzeichnet, dass** Polyole vorgesehen sind, die durch Umesterung von Kohlensäurediphenylester mit Diolen, vorzugsweise 1,6-Hexandiol, zugänglich sind und/oder dass Polycarbonat-Polyole vorgesehen sind, die aus der Reaktion von Kohlendioxid mit Epoxiden zugänglich sind.

7. Mehrschichtverbundfolie nach einem der vorhergehenden Ansprüche, **dadurch gekennzeichnet, dass** die Trägerschicht (3) einen Anteil von 50 % bis 100 % an Polyesterfilamenten aufweist.

8. Mehrschichtverbundfolie nach einem der vorhergehenden Ansprüche, **dadurch gekennzeichnet, dass** die Trägerschicht (3) ein Flächengewicht von 50 bis 300 g/m², bevorzugt zwischen 80 bis 150 g/m² und insbesondere zwischen 100 und 120 g/m² aufweist.

9. Mehrschichtverbundfolie nach einem der vorhergehenden Ansprüche, **dadurch gekennzeichnet, dass** die Funktionsschicht (3) ein Flächengewicht von 30 bis 80 g/m² aufweist.

10. Mehrschichtverbundfolie nach einem der vorhergehenden Ansprüche, **dadurch gekennzeichnet, dass** wenigstens zwei Trägerschichten (2) und/oder wenigstens eine Verstärkungsschicht (4) aus einem Verstärkungsgewebe oder Verstärkungsgelege vorgesehen sind.

11. Mehrschichtverbundfolie nach einem der vorhergehenden Ansprüche, **dadurch gekennzeichnet, dass** die Trägerschicht (2) und die Verstärkungsschicht (4) aus einem unterschiedlichen Material bestehen und /oder das Material der Verstärkungsschicht (4) in die Trägerschicht (2) eingearbeitet ist.

12. Mehrschichtverbundfolie nach einem der vorhergehenden Ansprüche, **dadurch gekennzeichnet, dass** die Reißdehnung der Funktionsschicht (3) nach einer Lagerung von 12 Wochen bei 70°C und 90% Luftfeuchtigkeit wenigstens 80%, insbesondere wenigstens 90% und vorzugsweise mehr als 90% des Ausgangswertes beträgt.

13. Verfahren zur Herstellung einer Mehrschichtverbundfolie nach einem der vorhergehenden Ansprüche, **dadurch gekennzeichnet, dass** die Trägerschicht (2) durch Extrusion mit der Funktionsschicht (3) beschichtet und verbunden wird.

14. Verfahren nach Anspruch 13, **dadurch gekennzeichnet, dass** nach der Beschichtung eine weitere Trägerschicht (2) oder eine Verstärkungsschicht auf die noch nicht verfestigte Funktionsschicht (3) aufgebracht und mit dieser fest verbunden wird.

## Claims

1. A multilayer composite film (1) for the construction industry, in particular roof linings, roof underlay or façade web, comprising at least one water-permeable and water-vapour-permeable non-woven fabric having polyester filaments as a carrier layer (2) and a water-tight and water-vapour-permeable functional layer (3), wherein the material of the functional layer (3) comprises TPU, in particular consists of TPU,
**characterised in that**
the TPU is a TPU of the carbonate type and that the functional layer (3) is extruded onto the carrier layer (2) so that the carrier layer (2) and the functional layer (3) are connected to one another by the extrusion process, wherein the functional layer (3) has a weight per surface area of 20 to 100 g/m².

2. Multilayer composite film according to claim 1, **characterised in that** the TPU is built up from one or more isocyanates and one or more polyols, particularly diols, by polyaddition.

3. Multilayer composite film according to claim 1 or 2, **characterised in that** at least one of the polyols contains the structural element of a carbonic acid ester and/or carbonic acid diester.

4. Multilayer composite film according to claim 2 or 3, **characterised in that** aromatic and/or aliphatic polyols, particularly short-chain diols, are provided as polyols.

5. Multilayer composite film according to one any of the preceding claims, **characterised in that** aliphatic diisocyanates, particularly H12 MDI (1-isocyanate-4-[(4-isocyanate-cyclohexyl) methyl]cyclohexane), HDI (1,6-hexamethylene diisocyanate) and/or IPDI (3-isocyanate-methyl-3,5,5-trimethylcyclohexyl isocyanate), and/or aromatic diisocyanates, in particular TDI (toluene-2,4 diisocyanate), NDI (naphthylene-1,5 diisocyanate) and/or MDI (methylenedi(phenyl isocyanate)) are provided as isocyanates.

6. Multilayer composite film according to claims 2 to 5, **characterised in that** polyols are provided, which are accessible by transesterification of carbonic acid diphenyl esters with diols, preferably 1,6-hexanediol, and/or that polycarbonate polyols are provided, which are accessible from the reaction of carbon dioxide with epoxides.

7. Multilayer composite film according to any one of the preceding claims, **characterised in that** the carrier layer (3) has a proportion of 50% to 100% of polyester filaments.

8. Multilayer composite film according to any one of the preceding claims, **characterised in that** the carrier layer (3) has a weight per surface area of 50 to 300 g/m², preferably between 80 and 150 g/m² and in particular between 100 and 120 g/m².

9. Multilayer composite film according to any one of the preceding claims, **characterised in that** the functional layer (3) has a weight per surface area of 30 to 80 g/m².

10. Multilayer composite film according to any one of the preceding claims, **characterised in that** at least two carrier layers (2) and/or at least one reinforcement layer (4) composed of a woven reinforcement fabric or interlaid reinforcement scrim are provided.

11. Multilayer composite film according to any one of the preceding claims, **characterised in that** the carrier layer (2) and the reinforcement layer (4) consist of a different material and/or the material of the reinforcement layer (4) is incorporated into the carrier layer (2).

12. Multilayer composite film according to any one of the preceding claims, **characterised in that** the elongation to tear of the functional layer (3) after storage of 12 weeks at 70°C and 90% air humidity is at least 80%, particularly at least 90% and preferably more than 90% of the initial value.

13. A method for producing a multilayer composite film according to any one of the preceding claims, **characterised in that** the carrier layer (2) is coated and connected to the functional layer (3) by means of extrusion.

14. Method according to claim 13, **characterised in that** after coating a further carrier layer (2) or a reinforcement layer is applied to the functional layer (3), that has not yet solidified, and firmly connected with it.

## Revendications

1. Film composite multicouche (1) pour le secteur des constructions, en particulier écran de sous-toiture, lé de sous-couverture ou lé de façade, comportant d'au moins un non-tissé présentant des filaments polyester perméables à l'eau et à la vapeur d'eau sous forme de couche de support (2), et d'une couche fonctionnelle (3) étanche à l'eau et perméable à la vapeur d'eau, selon laquelle le matériau de la couche fonctionnelle (3) présente du TPU et est en particulier constitué de TPU,
**caractérisé en ce que**
le TPU est un TPU du type carbonate et **en ce que** la couche fonctionnelle (3) est extrudée sur la couche de support (2), de telle sorte que la couche de support (2) et la couche fonctionnelle (3) soient liées l'une à l'autre par le processus d'extrusion, la couche fonctionnelle (3) présentant un grammage de 20 à 100 g/m².

2. Film composite multicouche selon la revendication 1, **caractérisé en ce que** le TPU est composé par polyaddition d'un ou plusieurs isocyanates et d'un ou plusieurs polyols, particulièrement de diols.

3. Film composite multicouche selon la revendication 1 ou 2, **caractérisé en ce qu'**au moins l'un des polyols contient l'élément structural d'un ester et/ou d'un diester d'acide carbonique.

4. Film composite multicouche selon la revendication 2 ou 3, **caractérisé en ce que** des polyols aromatiques et/ou aliphatiques, particulièrement des diols à chaîne courte, sont prévus en tant que de polyols.

5. Film composite multicouche selon l'une quelconque des revendications précédentes, **caractérisé en ce que** des diisocyanates aliphatiques, particulièrement le H12 MDI (1-isocyanate-4-[(4-isocyanatecyclohexyl)méthyl] cyclohexane), le HDI (1,6-diisocyanate d'hexaméthylène) et/ou l'IPDI (isocyanate de 3-isocyanatométhyl-3,5,5-triméthylcyclohexyle) et/ou des diisocyanates aromatiques, en particulier le TDI (tolylène-2,4-diisocyanate), le NDI (diisocyanate de 1,5-naphtylène) et/ou le MDI (diisocyanate de diphénylméthane), sont prévus en tant qu'isocyanates.

6. Film composite multicouche selon les revendications 2 à 5, **caractérisé en ce que** des polyols sont prévus, lesquels peuvent être obtenus par transestérification du ester diphénylique de l'acide carbonique avec des diols, de préférence du 1,6-hexanediol et/ou **en ce que** des polycarbonate polyols sont prévus, lesquels peuvent être obtenus à partir de la réaction du dioxyde de carbone avec des époxydes.

7. Film composite multicouche selon l'une quelconque des revendications précédentes, **caractérisé en ce que** la couche de support (3) présente une proportion de 50 % à 100 % de filaments polyester.

8. Film composite multicouche selon l'une quelconque des revendications précédentes, **caractérisé en ce que** la couche de support (3) présente un grammage de 50 à 300 g/m², de préférence compris entre 80 et 150 g/m² et particulièrement compris entre 100 et 120 g/m².

9. Film composite multicouche selon l'une quelconque des revendications précédentes, **caractérisé en ce que** la couche fonctionnelle (3) présente un grammage de 30 à 80 g/m².

10. Film composite multicouche selon l'une quelconque des revendications précédentes, **caractérisé en ce qu'**au moins deux couches de support (2) et/ou au moins une couche de renforcement (4) constituée d'un tissu de renforcement ou d'une couche de renforcement sont prévues.

11. Film composite multicouche selon l'une quelconque des revendications précédentes, **caractérisé en ce que** la couche de support (2) et la couche de renforcement (4) sont constituées d'un matériau différent et/ou **en ce que** le matériau de la couche de renforcement (4) est incorporé dans la couche de support (2).

12. Film composite multicouche selon l'une quelconque des revendications précédentes, **caractérisé en ce que** l'allongement final de la couche fonctionnelle (3), après stockage de 12 semaines à 70 °C et à 90 % d'humidité, est d'au moins 80 %, particulièrement d'au moins 90 % et de préférence supérieur à 90 % de la valeur initiale.

13. Procédé de fabrication d'un film composite multicouche selon l'une quelconque des revendications précédentes, **caractérisé en ce que** la couche de support (2) est recouverte et liée par extrusion à la couche fonctionnelle (3).

14. Procédé selon la revendication 13, **caractérisé en ce que**, après le revêtement, une autre couche de support (2) ou une couche de renforcement est appliquée sur la couche fonctionnelle (3) pas encore solidifiée et solidement liée à celle-ci.
